Europäisches Patentamt

European Patent Office

Office européen des brevets

(19)

(11) Numéro de publication: **0 318 372 B1**

(12) **FASCICULE DE BREVET EUROPEEN**

(45) Date de publication du fascicule du brevet:
19.12.90

(51) Int. Cl.⁵: **B60R 13/06**

(21) Numéro de dépôt: 88402932.3

(22) Date de dépôt: 23.11.88

(54) **Profilé pour le guidage et l'étanchéité d'une glace mobile, notamment d'une porte d'automobile, et son procédé de fabrication.**

(30) Priorité: 25.11.87 FR 8716334

(43) Date de publication de la demande:
31.05.89 Bulletin 89/22

(45) Mention de la délivrance du brevet:
19.12.90 Bulletin 90/51

(84) Etats contractants désignés:
AT BE CH DE ES GB IT LI LU NL SE

(56) Documents cités:
EP-A- 0 164 601
DE-A- 3 512 973
FR-A- 2 168 962
FR-A- 2 564 047

Le dossier contient des Informations techniques
présentées postérieurement au dépôt de la demande et
ne figurant pas dans le présent fascicule.

(73) Titulaire: **ETABLISSEMENTS MESNEL SOCIETE
ANONYME DITE :, 9 et 11, Rue de la Rivière,
F-78420 Carrières-Sur-Seine(FR)**

(72) Inventeur: **Mesnel, Gérard, 17, rue Victor Hugo,
F-78420 Carrieres sur Seine(FR)**

(74) Mandataire: **Jolly, Jean-Pierre et al, Cabinet BROT et
JOLLY 83, rue d'Amsterdam, F-75008 Paris(FR)**

ACTORUM AG

## Description

La présente invention concerne un profilé destiné à assurer le guidage et l'étanchéité d'une glace mobile, notamment d'une porte d'automobile. Elle concerne plus particulièrement un profilé de ce type destiné à équiper une porte d'automobile comprenant une glace du type dit affleurante.

L'invention a également pour objet un procédé de fabrication d'un tel profilé.

On connaît, par la demande de brevet francais FR-A 2 596 138, un profilé en élastomère extrudé, comportant une armature métallique, dont une première partie formant pince est destinée à permettre sa fixation sur l'encadrement de la glace mobile et dont une seconde partie à section en U, dite "coulisse", sert d'organe de guidage et d'etanchéité pour la glace mobile. Entre ces deux parties, une troisième partie à section en U, rigidement solidaire de la première partie, peut recevoir un profilé auxiliaire formant joint d'étanchéité du type dit "lécheur", dont au moins une lèvre lèche la face interne de la glace en position fermée. Ce lécheur peut aussi faire partie intégrante du profilé.

Selon la revendication 1 de la demande précitée, la première partie formant pince et la seconde partie formant organe de guidage sont articulées entre elles par une charnière élastique réalisée par pliage de la portion centrale de l'armature métallique du profilé, préalablement à l'extrusion de l'élastomère sur l'armature, ce pont étant ensuite découpé, après l'extrusion, de façon telle que l'armature soit éliminée, en laissant toutefois subsister une fraction de la gaine en élastomère, qui constitue la charnière de liaison.

Cette charnière autorise un certain degré de liberté entre les parties du profilé qu'elle réunit, qui peuvent ainsi pivoter l'une par rapport à l'autre, de manière à pouvoir adapter un même profilé à des encadrements présentant des angles d'ouverture différents et à assurer une excellente étanchéité de la glace en position fermée, sans imposer à celle-ci de contraintes excessives.

En outre, une partie de l'armature de la portion centrale découpée du profilé subsiste en formant deux branches des parties en U destinées à recevoir respectivement, d'une part, la glace mobile, d'autre part, le lécheur de glace, si celui-ci n'est pas venu d'extrusion avec le profilé.

Le profilé décrit et revendiqué dans la demande publiée précitée présente donc des avantages appréciables par rapport à ceux du même type général, conçus et brevetés précédemment par la Demanderesse.

La présente invention concerne une variante avantageuse d'un tel profilé, présentant des avantages fonctionnels par rapport au précédent et susceptible d'être réalisée par un procédé plus facile à mettre en œuvre.

Plus précisément, l'invention vise à proposer une variante du profilé du type précédent, dans laquelle la charnière élastique autorise non seulement un pivotement relatif des parties du profilé qu'elle réunit, mais également un mouvement de translation de la coulisse sensiblement dans le plan de déplacement de la glace mobile.

L'invention a également pour but de proposer un procédé de fabrication d'un tel profilé qui soit plus simple et n'implique pas, après extrusion de l'élastomère, un découpage d'une portion du pont réunissant la partie formant coulisse et la partie formant pince du profilé.

L'invention a par conséquent pour objet un profilé pour le guidage et l'étanchéité d'une glace mobile notamment d'une porte d'automobile, constitué d'un élastomère extrudé à armature métallique et comprenant une première partie à section en U formant pince, apte à être fixée sur le profilé d'encadrement de la glace mobile, et une seconde partie à section en U, tournée en sens inverse de ladite première partie et servant d'organe de guidage et d'étanchéité pour la glace mobile, la base du U de la seconde partie comprenant une portion dépourvue d'armature métallique, qui forme une charnière souple élastique en ledit élastomère et qui relie, d'une part, une portion externe de la seconde partie à section en U constituée par un brin de l'armature enrobé d'élastomère et, d'autre part, une portion interne constituée par la branche commune aux première et deuxième parties à sélection en U, la charnière autorisant le pivotement de ladite portion externe de la seçonde partie par rapport à la portion interne précitée (profilé de type divulgué par FR-A 2 596 138), ce profilé étant caractérisé en ce que ladite armature est sectionnée au niveau de la charnière en autorisant ainsi une double liberté de mouvement à ladite portion externe de la seconde partie: d'une part, de pivotement par rapport à ladite première partie, d'autre part, en translation sensiblement dans le plan de déplacement de la glace mobile.

Des modes particuliers de réalisation de l'invention sont précisés dans les revendications dépendantes.

L'invention a également pour objet un procédé de fabrication d'un tel profilé, caractérisé en ce que l'on met à la forme appropriée une bande métallique destinée à constituer ladite armature, en ce qu'on découpe longitudinalement cette bande en deux fractions à un emplacement correspondant à celui de ladite charnière souple élastique et en ce que l'on extrude ledit élastomère simultanément sur les deux fractions de bande en position contiguë appropriée, préalablement enduites d'un agent de collage dudit élastomère sur le métal de ladite bande.

Cette enduction pourra être effectuée avant ou après la mise en forme de la bande métallique.

Dans une mise en œuvre en continu d'un tel procédé, le découpage de la bande métallique se fera immédiatement avant l'extrusion de l'élastomère, qui recouvrira l'ensemble des deux portions de bande pour réaliser un profilé unique comprenant la charnière d'articulation et les lèvres d'étanchéité.

Le mouvement de translation de la coulisse servant d'organe de guidage de la vitre mobile se manifestera en fin de mouvement de la vitre, lorsque celle-ci arrivera en position fermée, la tranche de la vitre repoussant cette partie en direction de la partie contiguë de l'encadrement, avec un mouvement simultané de pivotement par rapport à la partie formant pince, ce qui assure une étanchéité accrue de la vitre, tout en facilitant ses déplacements.

Comme dans les profilés antérieurs de ce type, concus et brevetés par la Demanderesse, le lécheur de vitre pourra soit constituer un organe indépendant, rapporté sur le profilé et logé dans une partie à section en U à ouverture tournée en sens inverse de celle de la partie formant pince, dont elle est rigidement solidaire, soit faire partie intégrante du profilé et être venu d'extrusion avec celle-ci.

Le profilé conforme à l'invention se prête à l'équipement d'encadrements d'ouvertures de portes d'automobiles aussi bien dans le cas où ces encadrements ont des profils curvilignes à angles conformés rayonnés que des profils à angles aigus. Dans ce dernier cas, des découpes à section en V pourront être pratiqueés dans les parties du profilé correspondant aux angles de l'encadrement, afin de pouvoir courber facilement le profilé et de faciliter sa mise en place.

D'autres caractéristiques de l'invention apparaîtront dans la description qui va suivre, d'une forme de réalisation d'un profilé selon l'invention. Dans cette description, on se référera aux dessins annexés, sur lesquels:

La figure 1 est une coupe transversale du profilé;

Les figures 2 et 3 sont des coupes transversales illustrant la faculté d'adaptation de ce profilé à des encadrements de glace différents ;

La figure 4 illustre la déformation de ce profilé sous la sollicitation d'une vitre mobile ;

Les figures 5 et 6 illustrent l'utilisation des profilés conformes à l'invention pour l'équipement d'encadrements de vitres respectivement à angles curvilignes et à angles aigus.

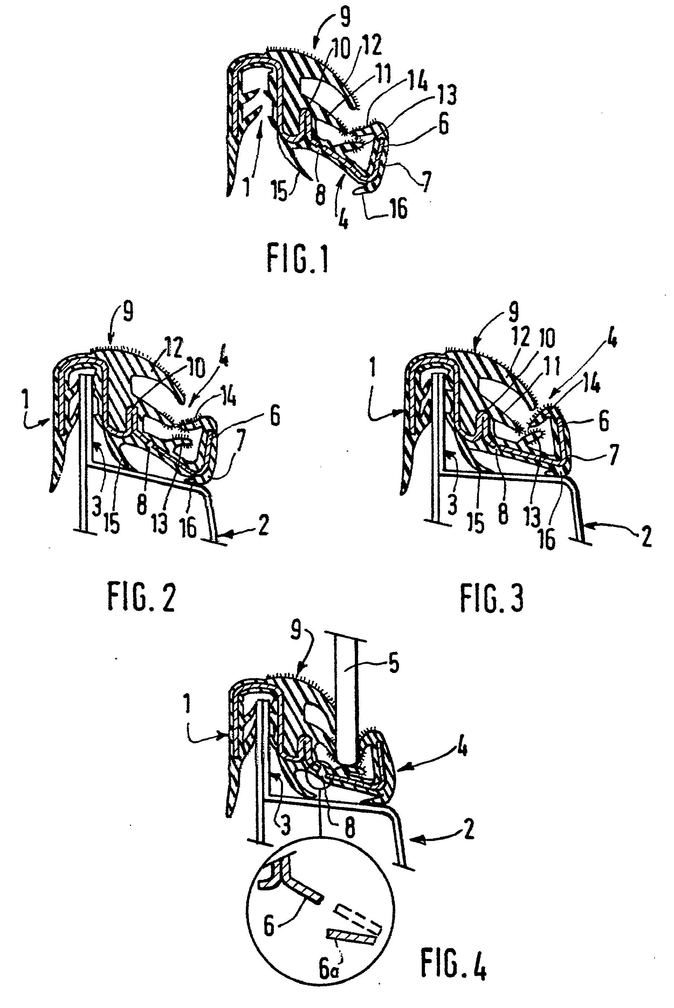

On se référera d'abord aux figures 1 à 4,sur lesquelles le profilé représenté est un profilé monobloc, c'est-à-dire dont le lécheur fait partie intégrante. Comme indiqué ci-dessus, le lécheur pourrait toutefois constituer aussi bien un profilé auxiliaire indépendant, logé dans une gorge du profilé conforme à l'invention.

Comme décrit dans la demande précitée, ce profilé comprend une partie en U, 1, formant pince, destinée à être rendue solidaire de l'encadrement 2 d'une porte d'automobile en coiffant une feuillure 3 de cet encadrement. Cette partie 1 est raccordée à une seconde partie en U, ou coulisse 4, servant d'organe de guidage et d'étanchéité pour une vitre mobile 5.

Les sections en U des parties 1 et 4 sont inversées l'une par rapport à l'autre.

Conformément à l'invention, la pince 1 et la coulisse 4 comprennent toutes deux une armature métallique 6, par exemple en aluminium, gainée d'un élastomère 7.

L'armature 6 est sectionnée dans la partie de base du U de la coulisse 4, pour y définir une charnière 8 en ledit élastomère, dépourvue d'armature. Cette charnière 8 autorise, d'une part, un pivotement de la coulisse 4 par rapport à la pince 1, d'autre part, en fin de course de la glace 5, lorsque celle-ci prend appui sur le fond de la coulisse 4 (voir partie à plus grande échelle de la figure 4), une translation du brin 6a de l'armature de la coulisse 4 par rapport à la pince 1 dans une direction sensiblement parallèle au plan de déplacement de la vitre 5.

Le profilé comprend en outre un élément d'étanchéité ou lécheur 9, attenant à la pince 1 et qu'une partie recourbée 10 de l'armature 6 ancre sur cette armature. Deux lèvres 11 et 12 de ce lécheur, comportant à leur surface des fibres floquées, viennent en contact avec la face interne de la vitre 5, en position fermée de celle-ci, tandis que deux lèvres de la coulisse, 13 et 14, également floquées attenantes respectivement au fond de celle-ci et à la bande latérale opposée au lécheur 9, assurent respectivement l'étanchéité au niveau de la tranche de la vitre 5 et sur la face externe de celle-ci. Deux autres lèvres, respectivement 15 et 16, faisant saillie à partir du fond de la coulisse en direction de l'encadrement 2, amortissent le mouvement du profilé lorsque celui-ci est sollicité par la vitre 5 et assurent l'étanchéité à ce niveau.

Un tel profilé et son articulation souple 8 sont réalisés en pré-enduisant d'un agent de collage sur métal une bande continue de métal destinée à constituer l'armature, de l'aluminium par exemple, que l'on plie ensuite à la forme désirée à l'aide d'un système à galets. Juste avant d'introduire la bande ainsi conformée dans la tête d'extrusion qui la recouvrira d'un élastomère au profil désiré en réalisant simultanément le lécheur et les différentes lèvres, la bande métallique est découpée à l'aide d'une molette de cisaillement suivant une ligne correspondant à l'emplacement de la charnière 8.

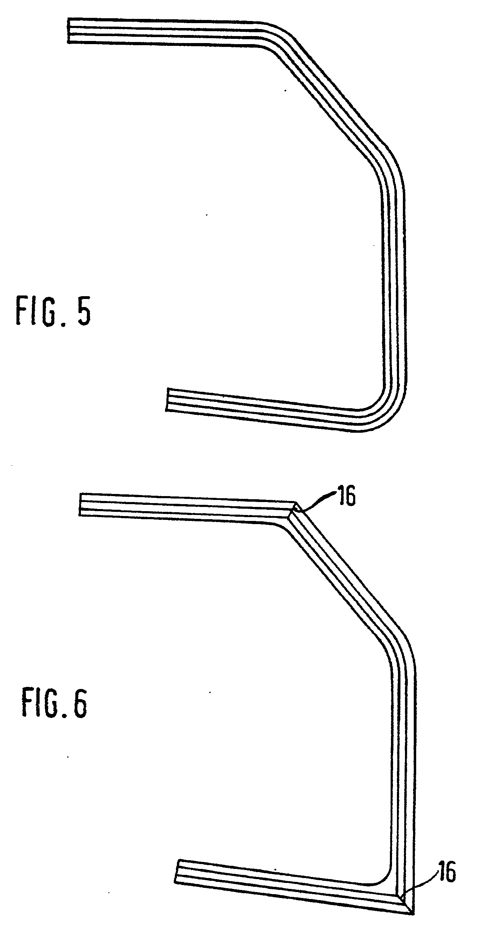

Après l'extrusion de l'élastomère, le profil résultant est prévulcanisé, enduit par flocage de fibres aux emplacements destinés à venir en contact avec la vitre 5 et découpé en sections élémentaires rectilignes, qui sont ensuite conformées au profil des encadrements de porte à équiper, que ceux-ci soient à angles arrondis, comme on le voit sur la figure 5, ou à angles aigus, comme sur la figure 6. Dans ce dernier cas, le profilé pourra comporter des découpes en V, 16, dans les angles, pour faciliter la mise en place du profilé sur l'encadrement.

Outre les avantages du profilé faisant l'objet du brevet principal (FR-A 2 596 138), le présent profilé se distingue par une plus grande facilité de fabrication et, par conséquent, par un coût moins élevé, et par une plus grande souplesse au niveau de la tranche de la vitre mobile, se traduisant par une étanchéité accrue.

Un même profilé conforme à la présente invention du fait de sa grande souplesse, pourra s'adapter à des encadrements de porte présentant des angles d'ouverture différente, comme représenté sur les figures 5 et 6.

## Revendications

1. Profilé pour le guidage et l'étanchéité d'une glace mobile notamment d'une porte d'automobile, constitué d'un élastomère extrudé (7) à armature métallique (6) et comprenant une première partie (1) à section en U formant pince, apte à être fixée sur le profilé d'encadrement (3) de la glace mobile, et une seconde partie (4) à section en U, tournée en sens inverse de ladite première partie et servant d'organe de guidage et d'étanchéité pour la glace mobile, la base du U de la seconde partie (4) comprenant une portion dépourvue d'armature métallique, qui forme une charnière souple élastique (8) en ledit élastomère et qui relie, d'une part, une portion externe de la seconde partie (4) à section en U constituée par un brin (6a) de l'armature enrobé d'élastomère et, d'autre part, une portion interne constituée par la branche commune aux première et deuxième parties (1, 4) à section en U, la charnière (8) autorisant le pivotement de ladite portion externe de la seconde partie (4) par rapport à la portion interne précitée, ce profilé étant caractérisé en ce que ladite armature (6) est sectionnée au niveau de la charnière (8) en autorisant ainsi une double liberté de mouvement à ladite portion externe de la seconde partie (4): d'une part, de pivotement par rapport à ladite première partie (1), d'autre part, en translation sensiblement dans le plan de déplacement de la glace mobile (5).

2. Profilé selon la revendication 1, caractérisée en ce qu'il résulte de l'enduction avec un élastomère extrudé, d'une bande métallique formant ladite armature (6), prédécoupée en deux parties en un emplacement correspondant à celui de ladite charnière (8).

3. Profilé selon l'une des revendications 1 et 2, caractérisé en ce qu'il comporte un organe d'étanchéité (9) du type lécheur, faisant partie intégrante de ce profilé et venu d'extrusion dudit élastomère, ledit lécheur (9) étant attenant à ladite partie formant pince (1).

4. Profilé selon la revendication 3, caractérisé en ce que ledit lécheur (9) est ancré sur la partie de ladite armature (6) de ladite pince (1) par l'intermédiaire d'une partie (10) de cette armature repliée à l'intérieur dudit lécheur.

5. Profilé selon l'une des revendications 1 et 2, caractérisé en ce que, de façon connue en soi, il comporte un organe d'étanchéité (9) du type lécheur, distinct dudit profilé et logé dans une partie à section en U de celui-ci rigidement solidaire de ladite partie formant pince (1).

6. Procédé de fabrication d'un profilé selon l'une des revendications 1 à 5, caractérisé en ce que l'on met à la forme appropriée une bande métallique destinée à constituer ladite armature (6), en ce qu'on découpe longitudinalement cette bande en deux fractions à un emplacement correspondant à celui de ladite charnière souple élastique (8) et en ce que l'on extrude ledit élastomère (7) simultanément sur les deux fractions de bande en position contiguë appropriée, préalablement enduites d'un agent de collage dudit élastomère sur le métal de ladite bande.

## Claims

1. A profiled member for the guidance and sealing-tightness of a movable window, particularly of a motor vehicle door, constituted by an extruded elastomer (7) with a metal reinforcement (6) and comprising a first part (1) of U-shaped cross-section forming a gripping means adapted to be fixed on the profiled frame (3) of the movable window, and a second part (4) with a U-shaped cross-section facing the opposite direction to the first part and serving as a guiding and sealing means for the movable window, the base of the U of the second part (4) comprising a portion which has no metal reinforcement and which forms a flexible elastic hinge (8) constitued by the said elastomer and connecting on the one hand an outer portion of the second part (4) of U-shaped cross-section, constituted by a flange (6a) of the elastomer-coated reinforcement and on the other an inner portion constituted by the arm which is common to the first and second parts (1, 4) of U-shaped cross-section, the hinge (8) allowing the said outer portion of the second part (4) to pivot in relaticn to the aforesaid inner portion, the said profiled member being characterised in that the said reinforcement (6) is cut at the level of the hinge (8), so allowing the said outer portion of the second part (4) a double freedom of movement: on the one hand to pivot in relation to the said first part (1) and on the other to move substantially in the plane of displacement of the movable window (5).

2. A profiled member according to Claim 1, characterised in that it results from coating with an extruded elastomer a metal strip which forms the said reinforcement (6), pre-cut into two parts at a position corresponding to that of the said hinge (8).

3. A profiled member according to one of Claims 1 and 2, characterised in that it comprises a sealing-tight member (9) of the lip type which is an integral part of the said profiled member and which is extruded with the said elastomer, the said sealing member (9) adjoining the said part (1) which constitutes a gripping means.

4. A profiled member according to Claim 3, characterised in that the said sealing member (9) is anchored on the part of the said reinforcement (6) of the said gripping means (1) by a part (10) of this reinforcement which is folded over inside the said sealing member.

5. A profiled member according to one of Claims 1 and 2, characterised in that in manner known per se it comprises a sealing-tight member (9) of the wiper or lip type, distinct from the profile and accommodated in a portion of this latter which is of U-shaped cross-section and which is rigidly attached to the said part (1) which forms a gripping means.

6. A method of producing a profiled member according to one of Claims 1 to 5, characterised in that a metal strip intended to constitute the said reinforcement (6) is appropriately shaped, the strip being cut longitudinally into two portions at a position corresponding to that of the said flexible elastic hinge (8) and in that the said elastomer (7) is simultaneously extruded on both portions of the strip in an appropriate contiguous position, the strips having been previously coated with an agent for bonding the said elastomer to the metal of the said strip.

## Patentansprüche

1. Führungs- und Dichtungsprofil für ein verschiebbares Fenster, insbesondere in einer Automobiltür, welches von einem extrudierten Elastomer (7) mit metallischer Armierung (6) gebildet wird und einen eine Klemme bildenden, ersten Bereich (1) mit U-förmigem Querschnitt, welcher für eine Befestigung am Profil des Rahmens (3) des verschiebbaren Fensters geeignet ist, und einen zweiten Bereich (4) mit U-förmigem Querschnitt umfaßt, welcher in zum ersten Bereich umgekehrtem Sinn angeordnet ist und als Führungs- und Dichtungsorgan für das verschiebbare Fenster dient, wobei die Basis des U des zweiten Bereiches (4) einen Abschnitt ohne metallische Armierung aufweist, welcher ein elastisches, biegsames Gelenk (8) in dem Elastomer ausbildet und welcher einerseits einen äußeren Abschnitt des zweiten Bereiches (4) mit U-förmigem Querschnitt, welcher von einem Schenkel (6a) der vom Elastomer ummantelten Armierung gebildet wird, und andererseits einen inneren Abschnitt verbindet, welcher vom dem ersten und zweiten Bereich (1, 4) mit U-förmigem Querschnitt gemeinsamen Schenkel gebildet wird, wobei das Gelenk (8) eine Verschwenkung des äußeren Abschnittes des zweiten Bereiches (4) relativ zum inneren Abschnitt ermöglicht, dadurch gekennzeichnet, daß die Armierung (6) auf Höhe des Gelenkes (8) unterteilt ist, wodurch eine doppelte Bewegungsfreiheit des äußeren Abschnittes des zweiten Bereiches (4) einerseits einer Verschwenkung relativ zum ersten Bereich (1) und andererseits eine Translationsbewegung im wesentlichen in der Verschiebungsebene des verschiebbaren Fensters (5) ermöglicht wird.

2. Profil nach Anspruch 1, dadurch gekennzeichnet, daß es aus dem Überziehen eines die Armierung bildenden und an einer dem Gelenk (8) entsprechenden Stelle in zwei Teile vorab geschnittenen Metallbandes mit einem extrudierten Elastomer resultiert.

3. Profil nach einem der Ansprüche 1 oder 2, dadurch gekennzeichnet, daß es ein Dichtorgan (9) des Typs einer Lippendichtung aufweist, welches einen integralen Bestandteil des Profils darstellt und durch Extrusion des Elastomers erhalten wird, wobei die Lippendichtung (9) an den die Klemme (1) bildenden Bereich angrenzt.

4. Profil nach Anspruch 3, dadurch gekennzeichnet, daß die Lippendichtung (9) an dem Bereich der Armierung (6) der Klemme (1) unter Zwischenschaltung eines Bereiches (10) der Armierung verankert ist, welcher Bereich in das Innere der Lippendichtung umgebogen ist.

5. Profil nach einem der Ansprüche 1 oder 2, dadurch gekennzeichnet, daß es in an sich bekannter Weise ein Dichtorgan (9) des Typs einer Lippendichtung umfaßt, welches vom Profil getrennt ausgebildet ist und in einem Bereich mit U-förmigem Querschnitt desselben fest in dem die Klemme (1) bildenden Bereich angeordnet ist.

6. Verfahren zur Herstellung eines Profils nach einem der Ansprüche 1 bis 5, dadurch gekennzeichnet, daß einem zur Ausbildung der Armierung (6) bestimmten Metallband eine entsprechende Form gegeben wird, daß das Band in Längsrichtung in zwei Teile an einer dem elastischen biegsamen Gelenk (8) entsprechenden Stelle unterteilt wird und daß das Elastomer (7) gleichzeitig auf die zwei Teile des Bandes in entsprechender, aneinander angegrenzender Position extrudiert wird, wobei die Teile vorher mit einem Klebemittel des Elastomers auf dem Metall des Bandes überzogen werden.

FIG.1

FIG.2

FIG.3

FIG.4

FIG. 5

FIG. 6

16

16